(19) Europäisches Patentamt
European Patent Office
Office européen des brevets

(11) **EP 2 329 327 B1**

(12) **EUROPEAN PATENT SPECIFICATION**

(45) Date of publication and mention
of the grant of the patent:
**31.10.2012 Bulletin 2012/44**

(21) Application number: **09783223.2**

(22) Date of filing: **21.09.2009**

(51) Int Cl.:
***G05B 13/02*** (2006.01)   ***G05B 13/04*** (2006.01)

(86) International application number:
**PCT/EP2009/062175**

(87) International publication number:
**WO 2010/034682 (01.04.2010 Gazette 2010/13)**

(54) **METHOD AND SYSTEM FOR CONTROLLING AN INDUSTRIAL PROCESS**

VERFAHREN UND SYSTEM ZUM STEUERN EINES INDUSTRIELLEN PROZESSES

PROCÉDÉ ET SYSTÈME DE COMMANDE DE PROCESSUS INDUSTRIEL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.09.2008 EP 08164844**

(43) Date of publication of application:
**08.06.2011 Bulletin 2011/23**

(73) Proprietor: **ABB Research Ltd.**
**8050 Zürich (CH)**

(72) Inventors:
• **STADLER, Konrad**
**CH-8166 Niederweningen (CH)**
• **GALLESTEY ALVAREZ, Eduardo**
**CH-5522 Tägerig (CH)**

• **POLAND, Jan**
**CH-5400 Baden (CH)**

(74) Representative: **ABB Patent Attorneys**
**C/o ABB Schweiz AG**
**Intellectual Property (CH-LC/IP)**
**Brown Boveri Strasse 6**
**CH-5400 Baden (CH)**

(56) References cited:
**WO-A-99/10783     US-A1- 2004 059 441**

• **AKALP M ET AL: "Supervisory fuzzy control of a rotary cement kiln" ELECTROTECHNICAL CONFERENCE, 1994. PROCEEDINGS., 7TH MEDITERRANEAN ANTALYA, TURKEY 12-14 APRIL 1994, NEW YORK, NY, USA,IEEE, 12 April 1994 (1994-04-12), pages 754-757, XP010130534 ISBN: 978-0-7803-1772-7**

**Description**

FIELD OF THE INVENTION

The present invention relates to a system and a control method for controlling an industrial process. Specifically, the invention relates to a system and a control method for controlling an industrial process, such as operating a rotary kiln in a cement production process, by calculating manipulated variables based on defined set-points and a fuzzy logic indicator determined from measured process variables.

BACKGROUND OF THE INVENTION

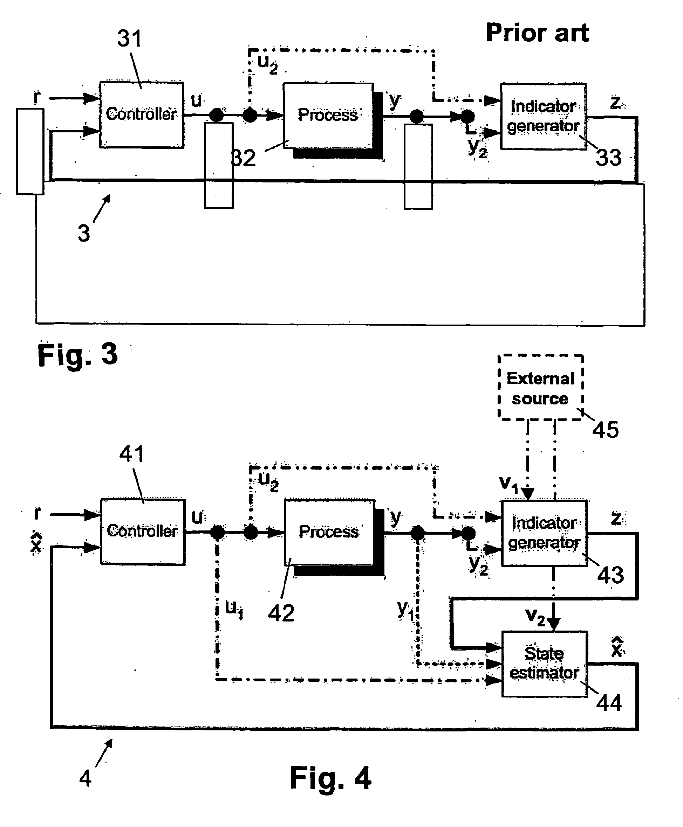

In advanced process control for industrial processes many different system configurations in respect to the control algorithm are known. However, as illustrated in Fig. 3, according to user specifications (set-points r), all systems generate set-points for a set of actuators (manipulated variables, u) taking into account measurements taken from a set of sensors (process variables, y). Typically, not all desired process variables y can be measured and therefore indicator generators 33 are used to determine process indicators z in approximation of these missing measurements. As illustrated schematically in Fig. 3, the indicators z are determined based on one or more of the process variables $y_2$ and/or manipulated variables $u_2$.

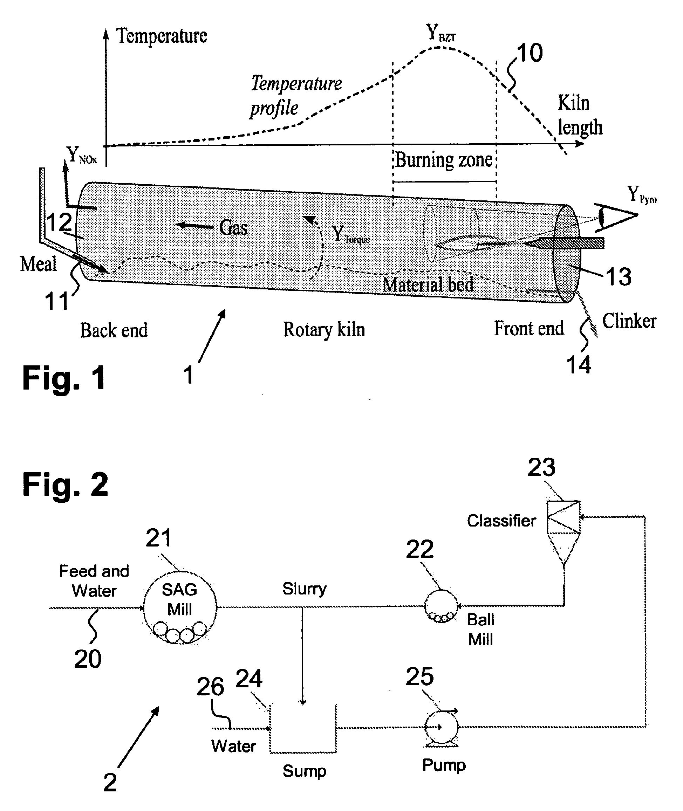

For example, in the cement production process, the raw components and the raw mixture are transported from the feeders to a kiln, possibly involving additional crushers, feeders that provide additional additives to the raw mixture, transport belts, storage facilities and the like. As illustrated in Fig. 1, the kiln 1 is arranged with a slope and mounted such that it can be rotated about its central longitudinal axis. The raw mixture (meal) 11 is introduced at the top (feed or back end) 12 of the kiln 1 and transported under the force of gravity down the length of the kiln 1 to an exit opening (discharge or front end) 13 at the bottom The kiln 1 operates at temperatures in the order of 1,000 degrees Celsius. As the raw mixture passes through the kiln, the raw mixture is calcined (reduced, in chemical terms). Water and carbon dioxide are driven off, chemical reactions take place between the components of the raw mixture, and the components of the raw mixture fuse to form what is known as clinker 14. In the course of these reactions new compounds are formed. The fusion temperature depends on the chemical composition of the feed materials and the type and amount of fluxes that are present in the mixture. The principal fluxes are alumina (Al2O3) and iron oxide (Fe2O3), which enable the chemical reactions to occur at relatively lower temperatures.

The environmental conditions of the clinker production (up to 2500°C, dusty, rotating) do not make possible direct measurement of the temperature profile 10 along the length of a rotary kiln 1. Typically, burning zone temperature $Y_{BZT}$ is used as the indicator in current systems and by the operators of a rotary cement kiln 1. The sintering condition or burning zone temperature $Y_{BZT}$ is usually related to one or a combination of several of the following measurements:

- The torque (or power) required to rotate the kiln 1 ($Y_{Torque}$);
- $NO_x$ measurements in the exhaust gas ($Y_{NOx}$); and
- Temperature readings based on a pyrometer located at the exit opening (discharge or front end) 13 of the kiln 1 ($Y_{Pyro}$).

As the hot meal becomes stickier at higher temperatures, the torque needed to rotate increases because more and more material is dragged up the side of the kiln. The temperature of the gas can be related to the $NO_x$ levels in the exhaust gas. All three measurements are unreliable, however. For example, the varying dust condition will significantly influence the pyrometer readings, as the pyrometer is directed very often at "shadows" producing false readings. Nevertheless, the aggregation of the three measurements, as defined in equation (1), usually provides a reasonably reliable determination of the burning zone temperature $Y_{BZT}$.

$$Y_{BZT} = f(Y_{Torque}, Y_{NOx}, Y_{Pyro}) \qquad (1)$$

Where f is a description on how $Y_{BZT}$ relates to the sensor measurements. Typically, the function f is described by a fuzzy logic system (often called expert system) performed by an indicator generator. This indicator is thus a fuzzy logic based indicator, for example an integer value on the scale [-3, +3] corresponding to an indication of [cold...hot], i.e. a fuzzy indicator of the aggregated burning zone temperature, but not an actual physical temperature value (in °C or °F).

Although, the aggregation of the three measurements provides the burning zone temperature as a reasonably reliable indicator of the burning zone temperature, it does not provide the temperature profile along the whole length of the rotary kiln. However, knowledge of the temperature profile would make possible better predictions of the process, leading to an improved process control.

In another example, a wet grinding process may require grinding circuits with different configurations depending on the ore characteristics, the design plant capacity, etc. As illustrated in Fig. 2, the grinding circuit 2 will typically comprise several mills (rod, ball, SAG, AG) 21, 22 in series and/or parallel with a number of classifiers (hydrocyclones) 23 and sumps 24 at appropriate locations. Typically, the arrangement is one where one of the streams leaving the classifier 23 is conduced back through a pump 25 either to a sump 24 or to another mill 21, 22 for further processing, while the other is eliminated from the circuit 2. One classifier will have the task of selecting the final product. Water 26 is normally added at the sumps 24, with fresh feed 20 entering the system. Grinding media is introduced in the system continuously based on estimations of their load in the mills 21, 22. The goal of the grinding section is to reduce the ore particle size to levels adequate for processing in the flotation stage. Measurable process variables may include mill sound level, mill bearing pressure, mill power draw, slurry density, and flows and pressures at critical places. Controllable variables to be manipulated include fresh feed rate, process water flow (pump rate), and rotational speed of the mill(s). The process targets include particle size specification, circulating load target, and bearing pressure limits. Thus, based on the measurable process variables and/or controllable variables, one or more indicators need to be determined for controlling the grinding process. It is crucial to be able to have a constant product rate within the quality specifications. It is also crucial to be able to execute this process step with lowest possible energy and grinding media consumption.

## DESCRIPTION OF THE INVENTION

It is therefore an objective of the present invention to provide a control system and a control method suitable for controlling an industrial process in a real plant situation where the available signals representing measurements of process variables possibly contradict each other, rendering them useless in a conventional model based control system. Particularly, it is an objective of the present invention to provide a control system and a control method which provide robust (reliable) indicators of the state of a cement rotary kiln that can be used to generate a temperature profile of the rotary kiln. Furthermore, it is a particular objective of the present invention to provide a control system and a control method which provide a robust indicator of a mill state of a grinding system.

At least some of these objectives are achieved by a control method for controlling an industrial process according to claim 1, and a control system for controlling an industrial process according to claim 7. Further preferred embodiments are evident from the dependent claims.

For controlling an industrial process, a plurality of process variables are measured, at least one fuzzy logic based indicator (short: fuzzy logic indicator) is determined from the measured process variables, and, for controlling the process, manipulated variables are calculated based on defined set-points and the fuzzy logic indicator. For example, the fuzzy logic indicator is determined using a neural network or a statistical learning method.

According to the present invention, the above-mentioned objects are particularly achieved in that, estimated process states are determined based on the fuzzy logic indicator, and the manipulated variables are calculated by a controller based on a model of the process using the estimated process states. Specifically, determined are estimated *physical* process states based on the fuzzy logic indicator, and the manipulated variables are calculated by a controller based on a *physical* model of the process using the estimated *physical* process states. For example, the controller is a Model Predictive Controller (MPC). For example, the estimated process states are determined by one of a Kalman filter, a state observer, and a moving horizon estimation method.

For example, the industrial process relates to operating a rotary kiln, e.g. for a cement production process. Correspondingly, measuring the process variables includes measuring the torque required for rotating the kiln, measuring the $NO_x$ level in exhaust gas, and taking pyrometer readings at an exit opening of the kiln. A burning zone temperature is determined as a fuzzy logic indicator based on the torque, the $NO_x$ level, and the pyrometer readings. A temperature profile along a longitudinal axis of the kiln is determined as the estimated process state based on the burning zone temperature, and the manipulated variables are calculated based on the temperature profile.

In an embodiment, the fuzzy logic indicator is based on the measured process variables and on one or more of the manipulated variables.

In a further embodiment, the estimated process states are determined based on the fuzzy logic indicator, one or more of the process variables, and/or one or more of the manipulated variables.

## BRIEF DESCRIPTION OF THE DRAWINGS

The present invention will be explained in more detail, by way of example, with reference to the drawings in which:

Fig. 1 shows a schematic illustration of a conventional rotary kiln and a graph of a temperature profile along the kiln,
Fig. 2 shows a block diagram illustrating a conventional grinding circuit for executing a wet grinding process,
Fig. 3 shows a block diagram illustrating a conventional control system for controlling an industrial process, the system comprising an indicator generator linked to the process controller.

Fig. 4 shows a block diagram illustrating an example of a control system according to the invention for controlling an industrial process, the system comprising a state estimator which links the indicator generator to a model based process controller.

## DETAILED DESCRIPTION OF PREFERRED EMBODIMENTS

Fig. 3 shows a conventional control system 3 comprising a process controller 31 for controlling an industrial process 32 based on user defined set-points r.

The control system 3 further comprises an indicator generator 33 comprising a fuzzy logic or expert system. The indicator generator 33 is configured to generate a fuzzy logic indicator z based on a set $y_2$ of measured process variables y, and/or based on a set $u_2$ of the manipulated variables u, generated by the process controller 31 for controlling the industrial process 32. The fuzzy logic indicator z is fed back to the process controller 31, which is accordingly configured as a fuzzy logic or expert system based controller to derive the set-points of the manipulated variables u based on the fuzzy logic indicator z.

For example, in a cement production process, specifically in operating a rotary kiln 1 in a cement production process, the fuzzy indicator z indicates the aggregated burning zone temperature $Y_{BZT}$ of the rotary kiln 1 and is determined based on a set $y_2$ of measured process variables y including torque ($Y_{Torque}$) required to rotate the kiln 1, $NO_x$ measurements in the exhaust gas ($Y_{NOx}$), and temperature readings based on a pyrometer located at the exit opening (discharge or front end) of the kiln ($Y_{Pyro}$), as described earlier with reference to Fig. 1.

In another example, in a wet grinding process, the fuzzy indicator z indicates a mill state of a grinding system and is determined based on a set $y_2$ of measured process variables y including mill sound level, mill bearing pressure, mill power draw, slurry density, and flows and pressures at specific places, as described earlier with reference to Fig. 2.

In Fig. 4, reference numeral 4 refers to a control system according to the invention for controlling an industrial process 42 such as a cement production process or a wet grinding process. The industrial process 42 is controlled based on set-points of manipulated variables u, generated by process controller 41 based on the user defined set-points r.

The control system 4 further includes an indicator generator 43 for determining one or more fuzzy logic indicator (s) z based on a set $y_2$ of measured process variables y, and/or based on a set $u_2$ of the manipulated variables u, as described above in the context of Fig. 3. In an embodiment, the indicator generator 43 is based on a neural net system or a statistical learning method.

In control system 4, the process controller 41 is implemented as a model based controller. Generally, in model based controllers (such as model predictive control, MPC) a mathematical model is used to predict the behavior of the system in the near future. This model can be a black-box or a physical model (i.e. grey-box) respectively. For control purposes the model states need to be provided before the controller generates the manipulated variables u. Specifically, MPC is a procedure of solving an optimal-control problem, which includes system dynamics and constraints on the system output and/or state variables. A system or process model valid at least around a certain operating point allows expressing a manipulated system trajectory or sequence of output signals y in terms of a present state of the system, forecasts of external variables and future control signals u. A performance, cost or objective function involving the trajectory or output signals y is optimized according to some pre-specified criterion and over some prediction horizon. An optimum first or next control signal $u_1$ resulting from the optimization is then applied to the system, and based on the subsequently observed state of the system and updated external variables, the optimization procedure is repeated. Depending on the embodiment, the model based controller 41 is based on any linear or nonlinear model based control algorithm, such as IMC (Internal Model Control), LQR (Linear Quadratic Regulator), LQG (Linear Quadratic Gaussian), Linear MPC (Model Predictive Control), NMPC (Nonlinear Model Predictive Control), or the like.

The control system 4 further comprises a state estimator 44 configured to determine the model states $\hat{x}$, e.g. as estimated physical process states, based on the fuzzy indicator z. As indicated schematically through dashed lines in Fig. 4, in different embodiments, the state estimator 44 is configured to determine the model states (estimated physical process states) $\hat{x}$ based also on a set $y_1$ of measured process variables y, and/or based on a set $u_1$ of the manipulated variables u. For example, the state estimator 44 is configured to derive the model states (estimated physical process states) $\hat{x}$ by estimation techniques such as Kalman filter, observer design or moving horizon estimation. EP 1406136 discloses an exemplary method of estimating model states or process properties. In a State Augmented Extended Kalman Filter (SAEKF) an augmented state p includes dynamic physical properties of the process which are representable by a function of the state vector x. In the example of the cement production process, the fuzzy logic indicator z provided by indicator generator 43 is the burning zone temperature $Y_{BZT}$ of the rotary kiln 1, and the state estimator 44 is configured to determine the temperature profile 10 along the longitudinal axis of the kiln 1 based on the burning zone temperature $Y_{BZT}$. For that purpose, the state estimator 44 includes preferably a suitable physical model of the kiln 1 which takes into account the mass flows and rotary speed of the kiln 1.

It should be noted that the sets $u_1$, $u_2$, $y_1$ and $y_2$, are either 0, a subset of the parent set ($u_i \subset u$ , $y_i \subset y$), or the complete parent set, respectively.

As illustrated schematically in Fig. 4, in an embodiment, there is an external, independent source 45, neither an actuator nor a measurement, providing an external input $v_1$ and/or $v_2$ to the indicator generator 43 and/or the state estimator 44, respectively. Correspondingly, the fuzzy logic indicator z is further based by the indicator generator 43 on external input $v_1$, and/or the model states $\hat{x}$ are further based by the state estimator 44 on the external input $v_2$.

The process controller 41, indicator generator 43, and the state estimator 44 are logic modules implemented as programmed software modules for controlling a processor. One skilled in the art will understand, however, that these logic modules can also be implemented fully or partly by hardware elements.

## Claims

1.   A control method for controlling an industrial process (42), the method comprising:

measuring a plurality of process variables (y);
determining at least one fuzzy logic based indicator (z) from the measured process variables (y); and
calculating, for controlling the process (42), manipulated variables (u) based on defined set-points (r) and the indicator (z);
**characterized in that**
the method further comprises determining estimated process states ($\hat{x}$) based on the indicator (z); and
the manipulated variables (u) are calculated by a controller (41) based additionally on a model of the process (42) using the estimated process states ($\hat{x}$).

2.   The method according to claim 1, wherein the indicator (z) is determined using a neutral network or statistical learning method.

3.   The method according to claim 1 or 2, wherein determining the estimated process states ($\hat{x}$) includes determining estimated physical process states based on the indicator (z); and the manipulated variables (u) are calculated by the controller (41) based on a physical model of the process (42) using the estimated physical process states ($\hat{x}$).

4.   The method according to one of claims 1 to 3, wherein the industrial process (42) relates to operating a rotary kiln (1); measuring the process variables (y) includes measuring the torque required for rotating the kiln (1), measuring the NOx level ($Y_{NOx}$) in exhaust gas, and taking pyrometer readings ($Y_{Pyro}$) at an exit opening (13) of the kiln (1); determining the indicator (z) includes determining a burning zone temperature ($Y_{BZT}$) based on the torque, the NOx level ($Y_{Nox}$), and the pyrometer readings ($Y_{Pyro}$); determining the estimated process states ($\hat{x}$) includes determining a temperature profile (10) along a longitudinal axis of the kiln (1) based on the burning zone temperature ($Y_{BZT}$); and the manipulated variables (u) are calculated based on the temperature profile (10).

5.   The method according to one of claims 1 to 4, wherein determining the indicator (z) is further based on one or more of the manipulated variables (u).

6.   The method according to one of claims 1 to 5, wherein determining the estimated process states ($\hat{x}$) is further based on one or more of the process variables (y) and/or one or more of the manipulated variables (u).

7.   The method according to one of claims 1 to 6, wherein the manipulated variables (u) are calculated by a Model Predictive Controller; the estimated process states ($\hat{x}$) are determined by one of a Kalman filter, a state observer, and a moving horizon estimation method.

8.   A control system (4) for controlling an industrial process (42), the system (4) comprising:

sensors for measuring a plurality of process variables (y);
an indicator generator (43) configured to determine at least one fuzzy logic based indicator (z) from the measured process variables (y); and
a process controller (41) configured to calculate manipulated variables (u) based on defined set-points (r) and the indicator (z);
**characterized in that**
the system (4) further comprises an estimator (44) configured to determine estimated process states ($\hat{x}$) based on the indicator (z); and
the process controller (41) is configured to calculate the manipulated variables (u) additionally based on a model of the process (42) using the estimated process states ($\hat{x}$).

9. The system according to claim 8, wherein the indicator generator (43) includes a neural network or a statistical learning method.

10. The system (4) according to claim 8 or 9, wherein the estimator (44) is configured to determine estimated physical process states ($\hat{x}$) based on the indicator (z); and the process controller (41) is configured to calculate the manipulated variables (u) based on a physical model of the process (42) using the estimated physical process states ($\hat{x}$).

11. The system (4) according to one of claims 8 to 10, wherein the industrial process (42) relates to operating a rotary kiln (1); the sensors are configured to mesure as process variables (y) the torque required for rotating the kiln (1), the NOx level ($Y_{NOx}$) in exhaust gas, and pyrometer readings ($Y_{pyro}$) at an exit opening (13) of the kiln (1); the indicator generator (43) is configured to determine as indicator (z) a burning zone temperature ($Y_{BZT}$) based on the torque, the NOx level ($Y_{NOx}$), and the pyrometer readings ($Y_{Pyro}$); the estimator (44) is configured to determine as estimated process states ($\hat{x}$) a temperature profile (10) along a longitudinal axis of the kiln (1) based on the burning zone temperature ($Y_{BZT}$); and the process controller (41) is configured to calculate the manipulated variables (u) based on the temperature profile (10).

12. The system (4) according to one of claims 8 to 11, wherein the indicator generator (43) is connected to the process controller (41); and the indicator generator (43) is further configured to determine the indicator (z) based on one or more of the manipulated variables (u).

13. The system (4) according to one of claims 8 to 12, wherein the estimator (44) is connected to the process controller (41) and/or one or more of the sensors; and the estimator (44) is further configured to determine the estimated process states ($\hat{x}$) based on one or more of the process variables (y) and/or one or more of the manipulated variables (u), respectively.

14. The system (4) according to one of claims 8 to 13, wherein the process controller (41) is a Model Predictive Controller; the estimator (44) includes one of a Kalman filter, a state observer, and a moving horizon estimation method.

**Patentansprüche**

1. Steuerungsverfahren zum Steuern eines industriellen Prozesses (42), wobei das Verfahren Folgendes aufweist:

   Messen mehrerer Prozessvariablen (y);
   Bestimmen mindestens eines Fuzzy-Logik-basierten Indikators (z) aus den gemessenen Prozessvariablen (y); und
   Berechnen manipulierter Variablen (u) basierend auf definierten Sollwerten (r) und dem Indikator (z) zum Steuern des Prozesses (42);
   **dadurch gekennzeichnet, dass**
   das Verfahren ferner das Bestimmen geschätzter Prozesszustände ($\hat{x}$) basierend auf dem Indikator (z) aufweist; und
   die manipulierten Variablen (u) durch einen Controller (41) zusätzlich basierend auf einem Modell des Prozesses (42) unter Verwendung der geschätzten Prozesszustände ($\hat{x}$) berechnet werden.

2. Verfahren nach Anspruch 1, wobei der Indikator (z) unter Verwendung einer neutralen Netzwerk- oder statistischen Lernmethode bestimmt wird.

3. Verfahren nach Anspruch 1 oder 2, wobei das Bestimmen der geschätzten Prozesszustände ($\hat{x}$) das Bestimmen geschätzter physikalischer Prozesszustände basierend auf dem Indikator (z) aufweist; und die manipulierten Variablen (u) durch den Controller (41) basierend auf einem physikalischen Modell des Prozesses (42) unter Verwendung der geschätzten physikalischen Prozesszustände ($\hat{x}$) berechnet werden.

4. Verfahren nach einem der Ansprüche 1 bis 3, wobei der industrielle Prozess (42) das Betreiben eines Drehrohrofens (1) betrifft; das Messen der Prozessvariablen (y) das Messen des Drehmomentes erforderlich zum Drehen des Ofens (1), das Messen des NOx-Levels ($Y_{NOx}$) im Abgas und das Vornehmen von Pyrometermessungen ($Y_{Pyro}$) an einer Ausgangsöffnung (13) des Ofens (1) aufweist; das Bestimmen des Indikators (z) das Bestimmen einer Brennzonentemperatur ($Y_{BZT}$) basierend auf dem Drehmoment, dem NOx-Level ($Y_{NOx}$) und den Pyrometermessungen ($Y_{Pyro}$) aufweist; das Bestimmen der geschätzten Prozesszustände ($\hat{x}$) das Bestimmen eines Temperaturprofils (10) entlang einer Längsachse des Ofens (1) basierend auf der Brennzonentemperatur ($Y_{BZT}$) aufweist; und die manipulierten Variablen (u) basierend auf dem Temperaturprofil (10) berechnet werden.

5. Verfahren nach einem der Ansprüche 1 bis 4, wobei das Bestimmen des Indikators (z) ferner auf einer oder mehreren der manipulierten Variablen (u) basiert.

6. Verfahren nach einem der Ansprüche 1 bis 5, wobei das Bestimmen der geschätzten Prozesszustände ($\hat{x}$) ferner auf einer oder mehreren Prozessvariablen (y) und/oder einer oder mehreren der manipulierten Variablen (u) basiert.

7. Verfahren nach einem der Ansprüche 1 bis 6, wobei die manipulierten Variablen (u) durch einen Model Predictive Controller berechnet werden; und die geschätzten Prozesszustände ($\hat{x}$) durch einen Kalman-Filter, einen Zustandsbeobachter oder ein Moving Horizon Estimation-Verfahren bestimmt werden.

8. Steuersystem (4) zum Steuern eines industriellen Prozesses (42), wobei das System (4) Folgendes aufweist:

Sensoren zum Messen mehrerer Prozessvariablen (y);
einen Indikatorerzeuger (43), konfiguriert zum Bestimmen mindestens eines Fuzzy-Logik-basierten Indikators (z) aus den gemessenen Prozessvariablen (y); und
einen Prozess-Controller (41), konfiguriert zum Berechnen manipulierter Variablen (u) basierend auf definierten Sollwerten (r) und dem Indikator (z);
**dadurch gekennzeichnet, dass**
das System (4) ferner einen Schätzer (44), konfiguriert zum Bestimmen geschätzter Prozesszustände ($\hat{x}$) basierend auf dem Indikator (z), aufweist; und
der Prozess-Controller (41) zum Berechnen der manipulierten Variablen (u) zusätzlich basiert auf einem Modell des Prozesses (42) unter Verwendung der geschätzten Prozesszustände ($\hat{x}$) konfiguriert ist.

9. System nach Anspruch 8, wobei der Indikatorerzeuger (43) eine neutrale Netzwerk- oder eine statistische Lernmethode aufweist.

10. System (4) nach Anspruch 8 oder 9, wobei der Schätzer (44) zum Bestimmen geschätzter physikalischer Prozesszustände ($\hat{x}$) basierend auf dem Indikator (z) konfiguriert ist; und der Prozess-Controller (41) zum Berechnen der manipulierten Variablen (u) basierend auf einem physikalischen Modell des Prozesses (42) unter Verwendung der geschätzten physikalischen Prozesszustände ($\hat{x}$) konfiguriert ist.

11. System (4) nach einem der Ansprüche 8 bis 10, wobei der industrielle Prozess (42) das Betreiben eines Drehrohrofens (1) betrifft; die Sensoren zum Messen des Drehmomentes erforderlich zum Drehen des Ofens (1), des NOx-Levels ($Y_{NOx}$) im Abgas und zum Vornehmen von Pyrometermessungen ($Y_{Pyro}$) an einer Ausgangsöffnung (13) des Ofens (1) als Prozessvariablen (y) konfiguriert sind; der Indikatorerzeuger (43) zum Bestimmen einer Brennzonentemperatur ($Y_{BZT}$) basierend auf dem Drehmoment, dem NOx-Level ($Y_{NOx}$) und den Pyrometermessungen ($Y_{Pyro}$) als Indikator (z) konfiguriert ist; der Schätzer (44) zum Bestimmen eines Temperaturprofils (10) entlang einer Längsachse des Ofens (1) basierend auf der Brennzonentemperatur ($Y_{BZT}$) als geschätzte Prozesszustände ($\hat{x}$) konfiguriert ist; und der Prozess-Controller (41) zum Berechnen der manipulierten Variablen (u) basierend auf dem Temperaturprofil (10) konfiguriert ist.

12. System (4) nach einem der Ansprüche 8 bis 11, wobei der Indikatorerzeuger (43) mit dem Prozess-Controller (41) verbunden ist; und der Indikatorerzeuger (43) ferner zum Bestimmen des Indikators (z) basierend auf einer oder mehreren der manipulierten Variablen (u) konfiguriert ist.

13. System (4) nach einem der Ansprüche 8 bis 12, wobei der Schätzer (44) mit dem Prozess-Controller (41) und/oder einem oder mehreren der Sensoren verbunden ist; und der Schätzer (44) ferner zum Bestimmen der geschätzten Prozesszustände ($\hat{x}$) basierend auf einer oder mehreren der Prozessvariablen (y) bzw. einer oder mehreren der manipulierten Variablen (u) konfiguriert ist.

14. System (4) nach einem der Ansprüche 8 bis 13, wobei der Prozess-Controller (41) ein Model Predictive Controller ist; und der Schätzer (44) einen Kalman-Filter, einen Zustandsbeobachter oder ein Moving Horizon Estimation-Verfahren aufweist.

**Revendications**

1. Procédé de commande pour commander un processus industriel (42), le procédé comprenant des étapes consistant à :

mesurer une pluralité de variables de procédé (y) ;
déterminer au moins un indicateur (z) sur la base d'une logique floue à partir des variables de procédé mesurées (y) ; et
calculer, pour contrôler le procédé (42), des variables manipulées (u) sur la base de points de consigne définis (r) et de l'indicateur (z) ;
**caractérisé en ce que**
le procédé comprend en outre la détermination des états de procédé estimés ($\hat{x}$) sur la base de l'indicateur (z) ; et les variables manipulées (u) sont calculées par un contrôleur (41) en se basant en outre sur un modèle du procédé (42) à l'aide des états de procédé estimés ($\hat{x}$).

2. Procédé selon la revendication 1, dans lequel l'indicateur (z) est déterminé à l'aide d'un réseau de neurones ou d'une méthode d'apprentissage statistique.

3. Procédé selon la revendication 1 ou la revendication 2, dans lequel la détermination des états de procédé estimés ($\hat{x}$) comprend la détermination des états de procédé physiques estimés sur la base de l'indicateur (z) ; et les variables manipulées (u) sont calculées par le contrôleur (41) sur la base d'un modèle physique du procédé (42) à l'aide des états de procédé physiques estimés ($\hat{x}$).

4. Procédé selon une des revendications 1 à 3, dans lequel le procédé industriel (42) concerne l'exploitation d'un four rotatif (1) ; la mesure des variables de procédé (y) comprend la mesure du couple requis pour faire tourner le four (1), la mesure du niveau de NOx ($Y_{NOx}$) dans les gaz d'échappement et la relève de mesures du pyromètre ($Y_{Pyro}$) à une ouverture de sortie (13) du four (1) ; la détermination de l'indicateur (z) comprend la détermination d'une température de zone de combustion ($Y_{BZT}$) sur la base du couple, du niveau de NOx ($Y_{NOx}$) et des relevés du pyromètre ($Y_{Pyro}$); la détermination des états de procédé estimés ($\hat{x}$) comprend la détermination d'un profil de température (10) le long d'un axe longitudinal du four (1) sur la base de la température de la zone de combustion ($Y_{BZT}$) ; et les variables manipulées (u) sont calculées sur la base du profil de température (10).

5. Procédé selon une des revendications 1 à 4, dans lequel la détermination de l'indicateur (z) est en outre basée sur une ou plusieurs des variables manipulées (u).

6. Procédé selon une des revendications 1 à 5, dans lequel la détermination des états de procédé estimés ($\hat{x}$) est en outre basée sur une ou plusieurs des variables de procédé (y) et/ou une ou plusieurs des variables manipulées (u).

7. Procédé selon une des revendications 1 à 6, dans lequel les variables manipulées (u) sont calculées par un contrôleur de modèle prédictif ; les états de procédé estimés ($\hat{x}$) sont déterminés par soit un filtre de Kalman, soit un observateur d'état, soit un procédé d'estimation d'horizon mobile.

8. Système de commande (4) pour commander un processus industriel (42), le système (4) comprenant :

des capteurs pour mesurer une pluralité de variables de procédé (y) ;
un générateur d'indicateur (43) configuré pour déterminer au moins un indicateur (z) sur la base d'une logique floue à partir des variables de procédé mesurées (y) ; et
un contrôleur de procédé (41) configuré pour calculer des variables manipulées (u) sur la base de points de consigne définis (r) et de l'indicateur (z) ;
**caractérisé en ce que**
le système (4) comprend en outre un estimateur (44) configuré pour déterminer des états de procédé estimés ($\hat{x}$) sur la base de l'indicateur (z) ; et
le contrôleur de procédé (41) est configuré pour calculer les variables manipulées (u) en se basant en outre sur un modèle du procédé (42) à l'aide des états de procédé estimés ($\hat{x}$).

9. Système selon la revendication 8, dans lequel le générateur d'indicateur (43) comprend un réseau de neurones ou d'une méthode d'apprentissage statistique.

**10.** Système (4) selon la revendication 8 ou la revendication 9, dans lequel l'estimateur (44) est configuré pour déterminer des états de procédé physiques estimés ($\hat{x}$) sur la base de l'indicateur (z) ; et le contrôleur de procédé (41) est configuré pour calculer les variables manipulées (u) sur la base d'un modèle physique du procédé (42) à l'aide des états de procédé physiques estimés ($\hat{x}$).

**11.** Système (4) selon une des revendications 8 à 10, dans lequel le procédé industriel (42) concerne l'exploitation d'un four rotatif (1) ; les capteurs sont configurés pour mesurer comme variables de procédé (y) le couple requis pour faire tourner le four (1), le niveau de NOx ($Y_{NOx}$) dans les gaz d'échappement et des relevés du pyromètre ($Y_{Pyro}$) à une ouverture de sortie (13) du four (1) ; le générateur d'indicateur (43) est configuré pour déterminer comme indicateur (z) une température de zone de combustion ($Y_{BZT}$) sur la base du couple, du niveau de NOx ($Y_{NOx}$) et des relevés du pyromètre ($Y_{Pyro}$) ; l'estimateur (44) est configuré pour déterminer comme états de procédé estimés ($\hat{x}$) un profil de température (10) le long d'un axe longitudinal du four (1) sur la base de la température de la zone de combustion ($Y_{BZT}$) ; et le contrôleur de procédé (41) est configuré pour calculer les variables manipulées (u) sur la base du profil de température (10).

**12.** Système (4) selon une des revendications 8 à 11, dans lequel le générateur d'indicateur (43) est raccordé au contrôleur de procédé (41) ; et le générateur d'indicateur (43) est en outre configuré pour déterminer l'indicateur (z) sur la base d'une ou de plusieurs des variables manipulées (u).

**13.** Système (4) selon une des revendications 8 à 12, dans lequel l'estimateur (44) est raccordé au contrôleur de procédé (41) et/ou à un ou plusieurs des capteurs ; et l'estimateur (44) est en outre configuré pour déterminer les états de procédé estimés ($\hat{x}$) sur la base d'une ou de plusieurs des variables de procédé (y) et/ou d'une ou de plusieurs des variables manipulées (u), respectivement.

**14.** Système (4) selon une des revendications 8 à 13, dans lequel le contrôleur de procédé (41) est un contrôleur de modèle prédictif ; l'estimateur (44) comprend soit un filtre de Kalman, soit un observateur d'état, soit un procédé d'estimation d'horizon mobile.

## Fig. 1

Temperature

$Y_{BZT}$

10

Temperature profile

Kiln length

$Y_{NOx}$

Burning zone

$Y_{Pyro}$

12

Gas

$Y_{Torque}$

13

Meal

Material bed

11

Back end

Rotary kiln

Front end

Clinker

14

1

## Fig. 2

23

Classifier

Feed and Water

21

Slurry

22

SAG Mill

Ball Mill

20

26  24

25

Water

Sump

Pump

2

**Prior art**

31

r → Controller u → Process y → Indicator generator z

u₂

32

y₂

33

3

## Fig. 3

External source

45

41

r
x̂ → Controller u → Process y → Indicator generator z

u₂

v₁

u₁

42

y₁

y₂

43

v₂

State estimator x̂

44

4

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1406136 A